# EUROPÄISCHE PATENTSCHRIFT

(11) **EP 1 193 098 B1**
(45) Veröffentlichungstag und Bekanntmachung des Hinweises auf die Patenterteilung: **02.01.2008**
(21) Anmeldenummer: 01122070.4
(22) Anmeldetag: 14.09.2001
(51) Int. Cl.: B60J 10/12, B60J 7/043

(54) **Dichtungssystem für einen Stützhebel an einem öffnungsfähigen Fahrzeugdach**
Sealing system for a support lever on an openable vehicle roof
Système d'étanchéité pour un levier de support dans un toit ouvrant de véhicule

(30) Priorität: 27.09.2000 DE 10048990
(43) Veröffentlichungstag der Anmeldung: 03.04.2002
(73) Patentinhaber: Webasto AG, 82131 Stockdorf (DE)
(72) Erfinder: Kohout, Erwin, 81375 München (DE); Dittrich, Wolfgang, 82205 Gilching (DE)
(74) Vertreter: Wiese, Gerhard

(56) Entgegenhaltungen:
- WO-A-97/12775
- DE-A- 3 920 909
- DE-C- 19 713 347
- FR-A- 1 519 762

## Beschreibung

Die Erfindung betrifft ein öffnungsfähiges Fahrzeugdach mit einem Stützhebel und einem Dichtungssystem gemäß dem Oberbegriff des Patentanspruchs 1.

Aus der DE 197 13 347 C1 ist ein derartiges Fahrzeugdach mit einem Stützhebel und einem Dichtungssystem bekannt, bei dem der Stützhebel an einem festen Fahrzeugdach beim Durchtreten durch einen Dichtspalt eines Führungskanals eine Dichtlippe seitlich wegdrückt. Beim Durchtreten und bei der anschließenden Gleitbewegung des Stützhebels wird die Dichtlippe stark beansprucht und neigt daher zu vorzeitigem Verschleiß

Aus der WO 97112775 A1 ist ein Dichtungssystem für eine Fensterscheibe eines Fahrzeugs bekannt, das zwei einander gegenüberliegende Hohlkammerdichtungen umfasst.

Der Erfindung liegt die Aufgabe zugrunde, ein Fahrzeugdach mit einem Stützhebel und mit einem Dichtungssystem zu schaffen, das eine verbesserte Dichtung bei vermindertem Verschleiß des Dichtungssystems ermöglicht.

Diese Aufgabe wird durch die Merkmale des Patentanspruchs 1 gelöst. Vorteilhafte Ausgestaltungen der Erfindung sind den Unteransprüchen zu entnehmen.

Die vorliegende Erfindung sieht im Kern vor, daß das Dichtungssystem zwei einander gegenüberliegende Dichtungen aufweist, die in abgesenkter Position des Stützhebels mit ihren Dichtflächen aneinander anliegen und nach dem Durchtreten des Stützhebels an diesem anliegen.

Eine bevorzugte Ausführungsform der Erfindung sieht vor, daß die Dichtungen als Hohlkammerdichtungen ausgebildet sind.

Dabei weisen die Hohlkammern in etwa einen Durchmesser auf, welcher der Breite des Stützhebels entspricht. Hierdurch wird gewährleistet, daß die Hohlkammern nach dem Durchtreten des Stützhebels nur etwa bis zur Hälfte ihres Durchmessers komprimiert werden.

Die Dichtflächen der Hohlkammerdichtungen sind vorzugsweise mit einem Gleitlack beschichtet. Hierdurch werden die Reibung und der Verschleiß deutlich reduziert.

Nachfolgend ist ein Ausführungsbeispiel der Erfindung anhand der Zeichnung beschrieben. Es zeigt:
- Figur 1: eine schematische perspektivische Teilansicht eines Fahrzeugdachs,
- Figur 2: eine Ausführungsform eines Dichtungssystems mit eingezogenem Stützhebel gemäß dem Schnitt A-A in Fig. 1, und
- Figur 3: das Dichtungssystem gemäß Fig. 2 mit ausgefahrenem Stützhebel.

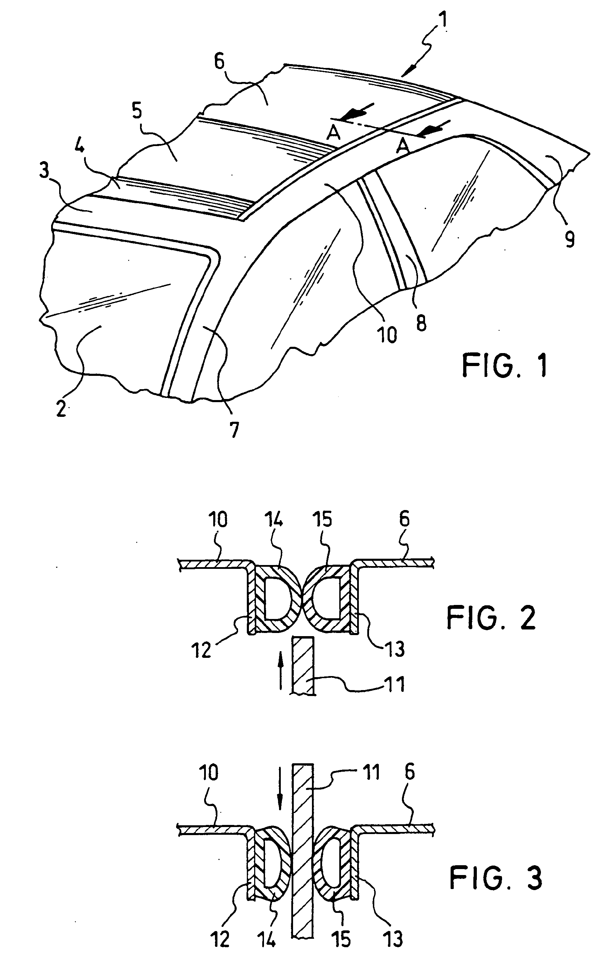

In Figur 1 ist ein festes Fahrzeugdach 1 gezeigt, bei dem sich an eine Frontscheibe 2 ein Windlauf 3, ein als Windabweiser-Lamelle ausgebildeter Windabweiser 4, ein hinter diesem angeordneter verschiebbarer Deckel 5 und eine dahinter liegende feste Dachscheibe 6 anschließt. Der Windabweiser 4 ist nahe seiner Vorderkante mittels einer Schwenklagerung schwenkbar am festen Fahrzeugdach 1 bzw. am Windlauf 3 gelagert. Das Fahrzeugdach 1 wird seitlich begrenzt von Seitenholmen 10, welche mit den A-Säulen 7, den B-Säulen 8 und den C-Säulen 9 verbunden sind.

Wenn sich der Windabweiser 4 in seiner Schließposition befindet, liegt sein hinteres Ende bündig an der Vorderkante des geschlossenen Deckels 5 an. Der Deckel 5 ist mit seiner Hinterkante nach oben ausstellbar und längs seitlicher Führungen (nicht dargestellt, siehe hierzu die eingangs genannte DE 197 13 347 C1) nach hinten über die feste Dachscheibe 6 verschiebbar. Vor dem Verschieben des Deckels 5 wird ein an einem verfahrbaren Schlitten gelagerter Stützhebel 11 durch Hochschwenken aktiviert, der den Deckel 5 während der gesamten Verschiebebewegung nahe von dessen Hinterkante abstützt, so wie dies in der DE 197 13 347 C1 ausführlich beschrieben ist.

Zwischen dem Seitenholm 10 und der festen Dachscheibe 6 ist ein Dichtungssystem angeordnet, welches den nicht dargestellten Führungskanal für den Stützhebel 11 (bzw. dessen Schlitten) in dessen abgesenkter Position nach oben verschließt, so daß das Fahrzeugdach 1 bei geschlossenem Deckel 5 ein glattflächiges Erscheinungsbild aufweist.

Das Dichtungssystem wird von zwei Hohlkammerdichtungen 14 bzw. 15 gebildet, die, wie aus Figur 2 ersichtlich, bei abgesenktem Stützhebel 11 mit ihren aufeinander zu weisenden Dichtflächen aneinander anliegen. Die erste Hohlkammerdichtung 14 ist an einem vertikalen Flansch 12 des Seitenholm 10 beispielsweise durch Kleben befestigt. Die zweite Hohlkammerdichtung 15 ist an einem vertikalen Flansch 13 der hinteren Dachscheibe 6 vorzugsweise ebenfalls durch Kleben befestigt.

Beim Durchtreten nach oben drückt der Stützhebel 11 die beiden Hohlkammerdichtungen 14 bzw. 15 teilweise zusammen, wobei sich deren Dichtflächen an die Seitenwände des Stützhebels 11 anlegen. Da der Stützhebel 11 beim Hochschwenken und bei der nachfolgenden Verschiebung des Deckels 5 an den Dichtflächen der Hohlkammerdichtungen 14 bzw. 15 entlang gleitet, sind diese Dichtflächen vorzugsweise mit einem Gleitlack beschichtet. Ein solcher Gleitlack kann beispielsweise PTFE (Teflon®)oder Silicon enthalten.

Um ein zu starkes Komprimieren der Hohlkammerdichtungen 14 bzw. 15 zu vermeiden, weisen deren Hohlkammern vorzugsweise einen Durchmesser auf, der zumindestens der Breite des Stützhebels 11 entspricht. Somit werden die Hohlkammern nur etwa bis zur Hälfte ihres Durchmessers komprimiert.

Der Stützhebel 11 ist vorzugsweise mittig zwischen den Dichtflächen der Hohlkammerdichtungen 14 bzw. 15 angeordnet.

### Bezugszeichenliste

- 1: Fahrzeugdach
- 2: Frontscheibe
- 3: Windlauf
- 4: Windabweiser (-Lamelle)
- 5: Deckel
- 6: Dachscheibe
- 7: A-Säule
- 8: B-Säule
- 9: C-Säule
- 10: Seitenholm
- 11: Stützhebel
- 12: Flansch
- 13: Flansch
- 14: Hohlkammerdichtung
- 15: Hohlkammerdichtung

## Patentansprüche

1. Öffnungsfähiges Fahrzeugdach (1) mit einem Stützhebel (11) und einem Dichtungssystem, bei dem wenigstens eine Dichtung (14, 15) den Stützhebel (11) in abgesenkter Position nach oben zumindestens teilweise abdeckt und von diesem beim Durchtreten in eine Stützposition zur Seite gedrückt wird, **dadurch gekennzeichnet, daß** das Dichtungssystem zwei einander gegenüberliegende Dichtungen (14, 15) aufweist, die in abgesenkter Position des Stützhebels (11) mit ihren Dichtflächen aneinander anliegen und nach dem Durchtreten des Stützhebels (11) an diesem anliegen.

2. Fahrzeugdach nach Anspruch 1, **dadurch gekennzeichnet, daß** die Dichtungen (14, 15) als Hohlkammerdichtungen ausgebildet sind.

3. Fahrzeugdach nach Anspruch 1 oder 2, **dadurch gekennzeichnet, daß** eine der Dichtungen (14) an einem vertikalen Flansch (12) eines Seitenholmes (10) befestigt ist.

4. Fahrzeugdach nach einem der Ansprüche 1 bis 3, **dadurch gekennzeichnet, daß** eine der Dichtungen (15) an einem vertikalen Flansch (13) einer festen Dachscheibe (6) befestigt ist.

5. Fahrzeugdach nach einem der Ansprüche 1 bis 4, **dadurch gekennzeichnet, daß** die Dichtungen (14,15) aus EPDM gefertigt sind.

6. Fahrzeugdach nach einem der Ansprüche 2 bis 5, **dadurch gekennzeichnet, daß** der Durchmesser einer Hohlkammer der Hohlkammerdichtungen (14,15) in etwa der Breite des Stützhebels (11) entspricht.

7. Fahrzeugdach nach einem der vorhergehenden Ansprüche, **dadurch gekennzeichnet, daß** die Dichtflächen der Dichtungen (14,15) mit einem Gleitlack beschichtet sind.

8. Fahrzeugdach nach einem der vorhergehenden Ansprüche, **dadurch gekennzeichnet, daß** der Stützhebel (11) mittig in Bezug auf die sich berührenden Dichtflächen der Dichtungen (14,15) angeordnet ist.

## Claims

1. Opening vehicle roof (1) having a supporting lever (11) and a sealing system, in which at least one seal (14, 15) covers the supporting lever (11) at least partly at the top when the supporting lever (11) is in the lowered position and is forced to the side by the latter as it passes into a supporting position, **characterized in that** the sealing system has two mutually opposite seals (14, 15) which, in the lowered position of the supporting lever (11), rest on one another with their sealing surfaces and, following the passage of the supporting lever (11), rest on the latter.

2. Vehicle roof according to Claim 1, **characterized in that** the seals (14, 15) are formed as hollow chamber seals.

3. Vehicle roof according to Claim 1 or 2, **characterized in that** one of the seals (14) is fixed to a vertical flange (12) of a side member (10).

4. Vehicle roof according to one of Claims 1 to 3, **characterized in that** one of the seals (15) is fixed to a vertical flange (13) of a fixed roof window (6)

5. Vehicle roof according to one of Claims 1 to 4, **characterized in that** the seals (14, 15) are fabricated from EPDM.

6. Vehicle roof according to one of Claims 2 to 5, **characterized in that** the diameter of a hollow chamber of the hollow chamber seals (14, 15) corresponds approximately to the width of the supporting lever (11).

7. Vehicle roof according to one of the preceding claims, **characterized in that** the sealing surfaces of the seals (14, 15) are coated with a lubricating varnish.

8. Vehicle roof according to one of the preceding claims, **characterized in that** the supporting lever (11) is arranged centrally in relation to the touching sealing surfaces of the seals (14,15).

## Revendications

1. Toit ouvrant de véhicule (1) comprenant un levier de soutien (11) et un système d'étanchéité, dans le cas duquel au moins un joint (14, 15) recouvre au moins partiellement le levier de soutien (11) en position abaissée et est écarté par ce dernier lorsque celui-ci le traverse pour se mettre en position de soutien, **caractérisé en ce que** le système d'étanchéité présente deux joints (14, 15) se faisant face, qui, lorsque le levier de soutien (11) est en position abaissée, sont appliqués l'un contre l'autre avec leurs surfaces d'étanchéité et, après que le levier de soutien (11) s'est glissé entre eux, sont appliqués contre ce dernier.

2. Toit de véhicule selon la revendication 1, **caractérisé en ce que** les joints (14, 15) sont réalisés en tant que joints creux.

3. Toit de véhicule selon la revendication 1 ou 2, **caractérisé en ce que** l'un des joints (14) est fixé sur une bride verticale (12) d'un montant latéral (10).

4. Toit de véhicule selon l'une des revendications 1 à 3, **caractérisé en ce que** l'un des joints (15) est fixé sur une bride verticale (13) d'une vitre de toit fixe (6).

5. Toit de véhicule selon l'une des revendications 1 à 4, **caractérisé en ce que** les joints (14, 15) sont en EPDM.

6. Toit de véhicule selon l'une des revendications 2 à 5, **caractérisé en ce que** le diamètre d'une cavité des joints creux (14,15) correspond approximativement à la largeur du levier de soutien (11).

7. Toit de véhicule selon l'une des revendications précédentes, **caractérisé en ce que** les surfaces d'étanchéité des joints (14, 15) sont enduites d'une laque lubrifiante.

8. Toit de véhicule selon l'une des revendications précédentes, **caractérisé en ce que** le levier de soutien (11) se situe au milieu par rapport aux surfaces d'étanchéité des joints (14, 15) qui se touchent.
